# EUROPEAN PATENT APPLICATION

(11) **EP 2 688 013 A1**
(43) Date of publication of application: **22.01.2014**
(21) Application number: 13175627.2
(22) Date of filing: 08.07.2013
(51) Int. Cl.: G06Q 10/00

(54) **Assessing risk associated with a domain**

(30) Priority: 19.07.2012 US 201213553340
(71) Applicant: Honeywell International Inc., Morristown, NJ 07962-2245 (US)
(72) Inventor: Laberge, Jason C., Morristown, NJ New Jersey 07962-2245 (US); Trenchard, Andrew J., Morristown, NJ New Jersey 07962-2245 (US); Thiruvengada, Hari, Morristown, NJ New Jersey 07962-2245 (US)
(74) Representative: Houghton, Mark Phillip

(57) **Abstract**

Devices, methods, and systems for assessing risk associated with a domain are described herein. One method includes determining an inherent risk associated with a number of boundaries associated with a domain, determining a threat potential associated with a number of disturbances associated with the domain, determining an actual threat associated with a number of control mechanisms associated with the domain, and determining an overall risk associated with the domain based on the inherent risk, the threat potential, and the actual threat.

## Description

### Technical Field

The present disclosure relates devices, methods, and systems for assessing risk associated with a domain.

### Background

Complex domains such as, for instance, process industry plants (e.g., refineries), are dynamic environments that can include distributed processes, uncertainty, time constraints, coupled subsystems, and/or a high degree of automation, for example. Problems in such domains can have a significant impact on safety, environmental, and/or profitable operations, for example, among other operations of the domain. Accordingly, it may be desirable to avoid problems in such domains.

One cause of problems in complex domains can be a lack of risk understanding by the operator(s) (e.g., the operations team) of the domain. For example, the operator(s) may be aware of a problem or a potentially problematic situation in the domain (e.g., the operator(s) may be aware of a risk in the domain and/or have information associated with the risk), but the operator(s) may not fully understand (e.g., comprehend and/or appreciate) the risk. Because the operator(s) may not fully comprehend and/or appreciate the risk, the operator(s) may not take the appropriate action to address the risk, which can lead to problems in the domain.

### Brief Description of the Drawings

Figure 1 illustrates a method for assessing risk associated with a domain in accordance with one or more embodiments of the present disclosure.
Figure 2 illustrates a method for assessing risk associated with a domain in accordance with one or more embodiments of the present disclosure.
Figure 3 illustrates a computing device for assessing risk associated with a domain in accordance with one or more embodiments of the present disclosure.

### Detailed Description

Devices, methods, and systems for assessing risk associated with a domain are described herein. For example, one or more embodiments include determining an inherent risk associated with a number of boundaries associated with a domain, determining a threat potential associated with a number of disturbances associated with the domain, determining an actual threat associated with a number of control mechanisms associated with the domain, and determining an overall risk associated with the domain based on the inherent risk, the threat potential, and the actual threat.

Assessing risk associated with a domain in accordance with one or more embodiments of the present disclosure can improve an operator's understanding of the risk. Because the operator may better understand the risk, the operator may be able to take appropriate action to address the risk and/or prevent problems from occurring in the domain.

In the following detailed description, reference is made to the accompanying drawings that form a part hereof. The drawings show by way of illustration how one or more embodiments of the disclosure may be practiced.

These embodiments are described in sufficient detail to enable those of ordinary skill in the art to practice one or more embodiments of this disclosure. It is to be understood that other embodiments may be utilized and that process, electrical, and/or structural changes may be made without departing from the scope of the present disclosure.

As will be appreciated, elements shown in the various embodiments herein can be added, exchanged, combined, and/or eliminated so as to provide a number of additional embodiments of the present disclosure. The proportion and the relative scale of the elements provided in the figures are intended to illustrate the embodiments of the present disclosure, and should not be taken in a limiting sense.

The figures herein follow a numbering convention in which the first digit or digits correspond to the drawing figure number and the remaining digits identify an element or component in the drawing. Similar elements or components between different figures may be identified by the use of similar digits.

As used herein, "a" or "a number of" something can refer to one or more such things. For example, "a number of disturbances" can refer to one or more disturbances.

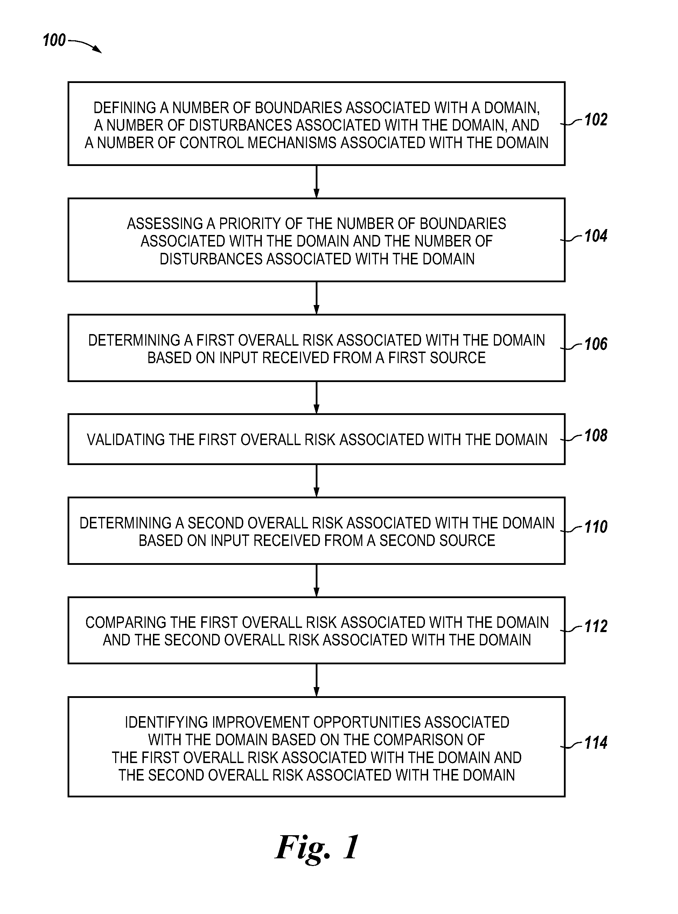

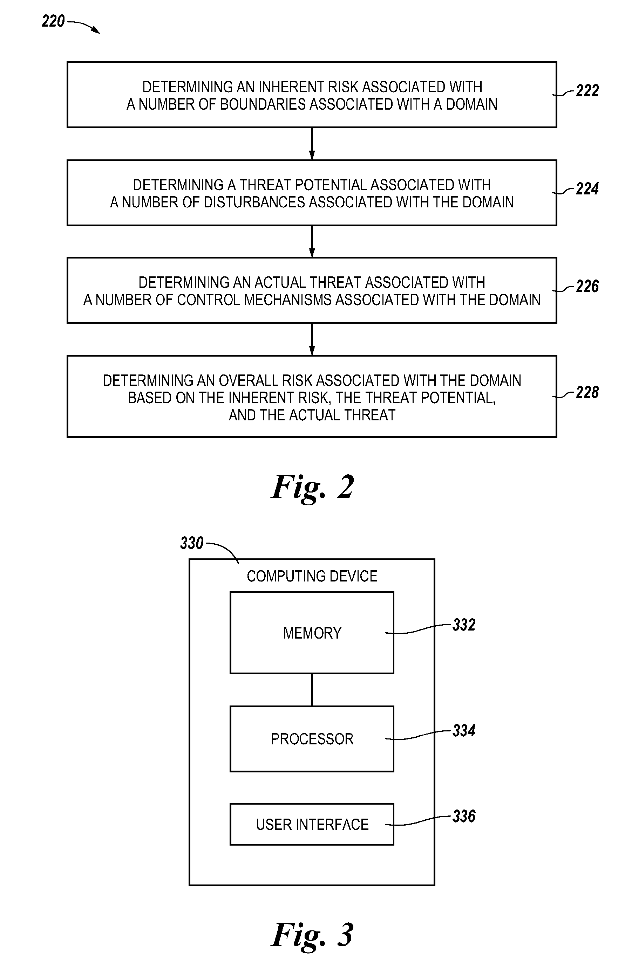

Figure 1 illustrates a method 100 for assessing risk associated with (e.g., in) a domain in accordance with one or more embodiments of the present disclosure. Method 100 can be performed, for example, by computing device 330 described in connection with Figure 3.

The domain can be, for example, a complex domain such as, for instance, a process industry plant (e.g., a refinery). However, embodiments of the present disclosure are not limited to a particular type of domain. Risk associated with a domain can include (e.g., be based on), for example, a combination of the likelihood an event will occur in the domain and the potential consequences of the event.

At block 102, method 100 includes defining a number of boundaries (e.g., process indicators) associated with the domain, a number of disturbances associated with the domain, and a number of control mechanisms (e.g., risk mitigation mechanisms) associated with the domain. In embodiments in which the domain is a process industry plant, the definitions can be based on, for example, existing risk analyses that have previously been done, such as, for instance, hazard and operability (HAZOP) studies and/or layer of protection analyses.

As an example, the definitions of the number of boundaries associated with the domain, the number of disturbances associated with the domain, and the number of control mechanisms associated with the domain can be received from a first source. The first source can be, for example, a site authority(ies) associated with the domain. The site authority associated with the domain can be, for example, a source considered to be an expert on and/or reference for risks associated with the domain. For instance, in embodiments in which the domain is a process industry plant, the site authority can be an individual or group that represents the Health, Safety, and Environment (HSE) functional organization. As an additional example, the site authority can include representatives from engineering (e.g., across any discipline), training, and/or management for the domain.

The number of boundaries associated with the domain can include, for example, a temperature associated with the domain, a pressure associated with the domain, an amount of oxygen present in the domain, and/or air flow in the domain, among other types of boundaries. For instance, the number of boundaries can include flue gas oxygen, pass flow, flame scanner, tube metal temperature, draft pressure, burner pressure, flue gas temperature, column pressure, furnace stack oxygen, furnace flame out, furnace tube skin temperature, preheat exchanger inlet pressure, column overhead temperature, column bottoms temperature, diesel side stripper level, and/or overhead gas discharge, among other types of boundaries associated with the domain. However, embodiments of the present disclosure are not limited to these boundary examples, and can include other types of boundaries associated with the domain.

The number of disturbances associated with the domain can include, for example, a number of possible events in the domain that can threaten the number of boundaries associated with the domain. For instance, the number of disturbances can include a crude switch, a rapid fuel heating value change, water carryover from a desalter, a rapid reduction in feed rate, changing burners in operation, a crude tank switch, unsettled water in a crude tank, a rain shower, a furnace fuel gas quality change, feed rate changes, and/or changing a furnace burner configuration, among other types of disturbances associated with the domain.

The number of control mechanisms associated with the domain can be, for example, mechanisms configured to manage (e.g., mitigate) threats caused by the number of disturbances to the number of boundaries. The number of control mechanisms can include, for example, a controller, a procedure, an alarm, and/or an intervention activity (e.g., a human intervention activity). For instance, in a petrochemical domain, the number of control mechanisms can include a crude switching procedure, a feed density alarm, a tower pressure and/or temperature controller, a furnace controller, a furnace stack oxygen controller, reducing or increase, a feed rate, switching feed tanks, and/or monitoring the firing of a furnace firebox, among other types of control mechanisms. However, embodiments of the present disclosure are not limited to these control mechanism examples (e.g., different control mechanisms could be associated with other types of domains).

At block 104, method 100 includes assessing a priority of the number of boundaries associated with the domain and the number of disturbances associated with the domain. In some embodiments, this assessment can be optional.

The priority assessment can include, for example, a selection of a particular number of top (e.g., most significant and/or important) boundaries and disturbances associated with the domain by both the site authority and an operator(s) (e.g., an operations team) associated with the domain, and a comparison of the selected top boundaries and disturbances to determine whether there is a consensus between the site authority and operator(s) on the top boundaries and disturbances. If there is a consensus, the remaining assessment of the risk associated with the domain (e.g., the remaining blocks of method 100) can focus on the selected top boundaries and disturbances, which can increase the speed of the remaining risk assessment. If there is not a consensus, the definitions of the number of boundaries, disturbances, and/or control mechanisms associated with the domain may have to be revisited (e.g., method 100 may return to block 102).

At block 106, method 100 includes determining a first overall risk associated with the domain based on input received from a first source. The first source can be, for example, a site authority(ies) associated with the domain, as previously described herein.

The input received from the first source can include, for example, an inherent risk associated with the number of boundaries associated with the domain, a threat potential associated with the number of disturbances associated with the domain, and an actual threat associated with the number of control mechanisms associated with the domain. That is, the first overall risk associated with the domain can be determined based on an inherent risk associated with the number of boundaries associated with the domain, a threat potential associated with the number of disturbances associated with the domain, and an actual threat associated with the number of control mechanisms associated with the domain provided by the first source. For example, the first overall risk can be determined by multiplying the inherent risk, the threat potential, and the actual threat (e.g., the first overall risk can be the product of the inherent risk, the threat potential, and the actual threat) provided by the first source.

The inherent risk associated with the number of boundaries can be based on, for example, a criticality associated with the number of boundaries and a proximity associated with the number of boundaries under normal (e.g., standard) operating conditions. However, embodiments of the present disclosure are not limited this example. Rather, there are other possible factors on which the inherent risk associated with the number of boundaries can be based (e.g., there are other possible ways in which the boundaries can be assessed).

The criticality associated with the number of boundaries can be based on the likely consequences of a boundary transgression such as, for instance, an off-spec product, equipment damage, and/or demand on the safety systems of the domain, among other consequences. The proximity associated with the number of boundaries can be based on how closely the domain operates to the boundaries under normal operating conditions. For example, the closer the domain operates to a boundary under normal operating conditions, the lower the safety margin or tolerance before the boundary is exceeded. Accordingly, highly critical boundaries that are operated close to the boundary limit under normal conditions can result in a higher inherent risk.

The threat potential associated with the number of disturbances can be based on, for example, the frequency of the number of disturbances (e.g., how often the disturbances occur) and the severity of the number of disturbances. For example, the greater the frequency of a disturbance and/or the greater the severity of a disturbance, the greater the threat potential associated with the disturbance. However, embodiments of the present disclosure are not limited this example. Rather, there are other possible factors on which the threat potential associated with the number of disturbances can be based (e.g., there are other possible ways in which the disturbances can be assessed).

The actual threat associated with the number of control mechanisms can be based on, for example, the effectiveness of the control mechanisms' management of the threats (e.g., the ability of the control mechanisms to control the threats) caused by the number of disturbances to the number of boundaries. For example, the more effective a control mechanism is at managing a threat (e.g., the greater the ability of the control mechanism to control the threat), the lower the actual threat associated with the control mechanism.

In some embodiments, the inherent risk associated with the number of boundaries, the threat potential associated with the number of disturbances, and/or the actual threat associated with the number of control mechanisms received from the first source can include a quantitative (e.g., numerical) rating of the inherent risk, a quantitative rating of the threat potential, and/or a quantitative rating of the actual threat, respectively, made by the first source. The quantitative ratings can be based on a quantitative rating scale such as, for example, an anchored nine point rating scale, wherein the greater (e.g., higher) the rating, the greater the inherent risk, threat potential, or actual threat. As an additional example, a particular quantitative ranking can correspond to a particular inherent risk, threat potential, or actual threat. For instance, a ranking of zero can correspond to no inherent risk, threat potential, or actual threat, a ranking of one can correspond to a low inherent risk, threat potential, or actual threat, a ranking of three can correspond to a medium inherent risk, threat potential, or actual threat, and a ranking of nine can correspond to a high inherent risk, threat potential, or actual threat.

In some embodiments, the inherent risk associated with the number of boundaries, the threat potential associated with the number of disturbances, and/or the actual threat associated with the number of control mechanisms received from the first source can include a qualitative (e.g., linguistic) rating of the inherent risk, a quantitative rating of the threat potential, and/or a quantitative rating of the actual threat, respectively, made by the first source. The qualitative ratings can be based on a qualitative rating scale such as, for example, none, low, and high.

At block 108, method 100 includes validating the first overall risk associated with the domain. In some embodiments, the validation of the first overall risk associated with the domain can be optional. The first overall risk associated with the domain can be validated using, for example, contextual interviews with the first source (e.g., the site authority), semi-quantitative mappings of HAZOP and/or layer of protection analysis (LOPA) results to the first overall risk, and/or by ensuring the first source is aware of existing HAZOP and/or LOPA results prior to providing the input at block 106, among other validation techniques.

As an example, the first overall risk can be validated based on existing (e.g., previously done) risk analyses to ensure the first overall risk is a valid point of reference. For instance, a semi-quantitative mapping scheme can be used to align the existing risk analyses with the first overall risk. If the first overall risk is not validated (e.g., if the first overall risk is not aligned with the existing risk analyses), the first overall risk may have to be determined again. For instance, method 100 may return to block 106, where additional and/or different input (e.g., an additional and/or different inherent risk(s), threat potential(s), and/or actual threat(s)) may be provided by the first source.

At block 110, method 100 includes determining a second overall risk associated with the domain based on input received from a second source. The second source can be, for example, a number of operators (e.g., an operations team) associated with the domain. In some embodiments, the operators can represent different shifts at the domain.

The input received from the second source can include, for example, an inherent risk associated with the number of boundaries associated with the domain, a threat potential associated with the number of disturbances associated with the domain, and an actual threat associated with the number of control mechanisms associated with the domain. That is, the second overall risk associated with the domain can be determined based on an inherent risk associated with the number of boundaries associated with the domain, a threat potential associated with the number of disturbances associated with the domain, and an actual threat associated with the number of control mechanisms associated with the domain provided by the second source. For example, the second overall risk can be determined by multiplying the inherent risk, the threat potential, and the actual threat (e.g., the first overall risk can be the product of the inherent risk, the threat potential, and the actual threat) provided by the second source.

As previously described herein, the inherent risk associated with the number of boundaries can be based on a criticality associated with the number of boundaries and a proximity associated with the number of boundaries under normal operating conditions, the threat potential associated with the number of disturbances can be based on the frequency and severity of the number of disturbances, and the actual threat associated with the number of control mechanisms can be based on the effectiveness of the control mechanisms' management of the threats caused by the number of disturbances to the number of boundaries. Further, in some embodiments, the inherent risk, threat potential, and/or actual threat received from the second source can include a quantitative or qualitative rating of the inherent risk, threat potential, and/or actual threat, respectively, made by the second source, in a manner analogous to the inherent risk, threat potential, and/or actual threat received from the first source previously described herein.

At block 112, method 100 includes comparing (e.g., providing a comparison of) the first overall risk associated with the domain (e.g., the overall risk determined at block 106) and the second overall risk associated with the domain (e.g., the overall risk determined at block 110). The comparison can include an aggregate comparison of the first and second overall risks, and/or separate comparisons of one or more of the inputs used to determine the first and second overall risks (e.g., the comparison can include comparing the inherent risks received from the first and second sources, comparing the threat potentials received from the first and second sources, and/or comparing the actual threats received from the first and second sources).

The comparison of the first overall risk associated with the domain and the second overall risk associated with the domain can identify a gap(s) between the first and second overall risks. For instance, the comparison can identify a gap(s) between the inherent risks, threat potentials, and/or actual threats received from the first and second sources. The gap(s) between the first and second overall risks can be identified based on, for example, a pre-defined numerical threshold (e.g., a difference of 20% or more between the first and second overall risks), a statistical analysis of the averages of the inputs received from the first and second sources, a variability in the inputs received from the second source (e.g., the number of operators), and/or a visualization of the inputs received from the first and second sources.

A gap(s) between the first overall risk associated with the domain and the second overall risk associated with the domain may indicate a gap between the first source's (e.g., the site authority's) and the second source's (e.g., the number of operators') understanding of a risk(s) associated with (e.g., in) the domain. Accordingly, a gap(s) between the first and second overall risks may indicate that the number of operators do not adequately or fully understand (e.g., comprehend and/or appreciate) the risk(s) associated with the domain.

At block 114, method 100 includes identifying improvement opportunities associated with the domain (e.g., ways to reduce the risk(s) associated with the domain) based on the comparison of the first overall risk associated with the domain and the second overall risk associated with the domain (e.g., based on the comparisons of the inputs used to determine the first and second overall risks). For example, if a gap(s) exists between the first overall risk and the second overall risk, improvement opportunities can be identified by identifying the source of information for each input received from the second source, and determining whether improvements are possible.

The identified improvement opportunities can improve the number of operators' understanding of the risk(s) associated with the domain. Because the operators may better understand the risk, they may be able to take appropriate action to address the risk and/or prevent problems from occurring in the domain.

Figure 2 illustrates a method 220 for assessing risk associated with (e.g., in) a domain in accordance with one or more embodiments of the present disclosure. Method 220 can be, for example, a part of block 106 and/or block 110 previously described in connection with Figure 1.

Method 220 can be performed, for example, by computing device 330 described in connection with Figure 3.

At block 222, method 220 includes determining an inherent risk associated with a number of boundaries associated with a domain. At block 224, method 220 includes determining a threat potential associated with a number of disturbances associated with the domain. At block 226, method 220 includes determining an actual threat associated with a number of control mechanisms associated with the domain. The determined inherent risk, determined threat potential, and determined actual threat can be, for example, the inherent risk, threat potential, and actual threat, respectively, received from a first source, as previously described in connection with block 106 of Figure 1, and/or the inherent risk, threat potential, and actual threat, respectively, received from a second source, as previously described in connection with block 110 of Figure 1.

At block 228, method 220 includes determining an overall risk associated with the domain based on the inherent risk, the threat potential, and the actual threat. The determined overall risk can be, for example, the first overall risk determined based on the inherent risk, threat potential, and actual threat received from the first source, as previously described in connection with block 106 of Figure 1, and/or the second overall risk determined based on the inherent risk, threat potential, and actual threat received from the second source, as previously described in connection with block 110 of Figure 1.

Figure 3 illustrates a computing device 330 for assessing risk associated with a domain in accordance with one or more embodiments of the present disclosure. Computing device 330 can be, for example, a laptop computer, a desktop computer, or a mobile device (e.g., a mobile phone, a personal digital assistant, etc.), among other types of computing devices.

As shown in Figure 3, computing device 330 can include a memory 332 and a processor 334 coupled to memory 332. Memory 332 can be any type of storage medium that can be accessed by processor 334 to perform various examples of the present disclosure. For example, memory 332 can be a non-transitory computer readable medium having computer readable instructions (e.g., computer program instructions) stored thereon that are executable by processor 334 to assess risk associated with a domain in accordance with one or more embodiments of the present disclosure.

Memory 332 can be volatile or nonvolatile memory. Memory 332 can also be removable (e.g., portable) memory, or non-removable (e.g., internal) memory. For example, memory 332 can be random access memory (RAM) (e.g., dynamic random access memory (DRAM) and/or phase change random access memory (PCRAM)), read-only memory (ROM) (e.g., electrically erasable programmable read-only memory (EEPROM) and/or compact-disc read-only memory (CD-ROM)), flash memory, a laser disc, a digital versatile disc (DVD) or other optical disk storage, and/or a magnetic medium such as magnetic cassettes, tapes, or disks, among other types of memory.

Further, although memory 332 is illustrated as being located in computing device 330, embodiments of the present disclosure are not so limited. For example, memory 332 can also be located internal to another computing resource (e.g., enabling computer readable instructions to be downloaded over the Internet or another wired or wireless connection).

As shown in Figure 3, computing device 330 can also include a user interface 336. User interface 336 can include, for example, a display (e.g., a screen). The display can be, for instance, a touch-screen (e.g., the display can include touch-screen capabilities).

Computing device 330 can receive information from a user of computing device 330 through an interaction with the user via user interface 336. The user can be, for example, the first source and/or second source previously described herein (e.g., in connection with Figures 1 and 2).

For instance, computing device 330 can receive input from the first and/or second source such as, for example, the input from the first and/or second source previously described herein (e.g., an inherent risk associated with a number of boundaries associated with the domain, a threat potential associated with a number of disturbances associated with the domain, and an actual threat associated with a number of control mechanisms associated with the domain) via user interface 336. The user can enter the input into computing device 330 using, for instance, a mouse and/or keyboard associated with computing device 330 (e.g., user interface 336), or by touching user interface 336 in embodiments in which user interface 336 includes a touch-screen.

Additionally, user interface 336 (e.g., the display of user interface 336) can provide (e.g., display and/or present) information to the user of computing device 330. For example, user interface 336 can provide the determined first overall risk associated with the domain and/or the determined second overall risk associated with the domain previously described herein (e.g., in connection with Figures 1 and 2) to the user. As an additional example, user interface 336 can provide the comparison of the first and second overall risks previously described herein (e.g., in connection with Figure 1) to the user.

Although specific embodiments have been illustrated and described herein, those of ordinary skill in the art will appreciate that any arrangement calculated to achieve the same techniques can be substituted for the specific embodiments shown. This disclosure is intended to cover any and all adaptations or variations of various embodiments of the disclosure.

It is to be understood that the above description has been made in an illustrative fashion, and not a restrictive one. Combination of the above embodiments, and other embodiments not specifically described herein will be apparent to those of skill in the art upon reviewing the above description.

The scope of the various embodiments of the disclosure includes any other applications in which the above structures and methods are used. Therefore, the scope of various embodiments of the disclosure should be determined with reference to the appended claims, along with the full range of equivalents to which such claims are entitled.

In the foregoing Detailed Description, various features are grouped together in example embodiments illustrated in the figures for the purpose of streamlining the disclosure. This method of disclosure is not to be interpreted as reflecting an intention that the embodiments of the disclosure require more features than are expressly recited in each claim.

Rather, as the following claims reflect, inventive subject matter lies in less than all features of a single disclosed embodiment. Thus, the following claims are hereby incorporated into the Detailed Description, with each claim standing on its own as a separate embodiment.

## Claims

1. A computer implemented method (100, 220) for assessing risk associated with a domain, comprising:
determining (222) an inherent risk associated with a number of boundaries associated with a domain;
determining (224) a threat potential associated with a number of disturbances associated with the domain;
determining (226) an actual threat associated with a number of control mechanisms associated with the domain; and
determining (228) an overall risk associated with the domain based on the inherent risk, the threat potential, and the actual threat.

2. The method (100, 220) of claim 1, wherein the inherent risk associated with the number of boundaries is based on:
a criticality associated with the number of boundaries; and
a proximity associated with the number of boundaries under normal operating conditions.

3. The method (100, 220) of claim 1, wherein the number of boundaries associated with the domain include at least one of:
a temperature associated with the domain;
a pressure associated with the domain;
an amount of oxygen present in the domain; and
air flow in the domain.

4. The method (100, 220) of claim 1, wherein the number of disturbances include a number of possible events in the domain that can threaten the number of boundaries associated with the domain.

5. The method (100, 220) of claim 1, wherein the threat potential associated with the number of disturbances is based on:
a frequency of the number of disturbances; and
a severity of the number of disturbances.

6. The method (100, 220) of claim 1, wherein the number of control mechanisms are configured to manage threats caused by the number of disturbances to the number of boundaries.

7. The method (100, 220) of claim 1, wherein the number of control mechanisms include at least one of:
a controller;
a procedure;
an alarm; and
an intervention activity.

8. The method (100, 220) of claim 1, wherein the method includes validating (108) the overall risk associated with the domain.

9. The method (100, 220) of claim 1, wherein the method includes receiving definitions of the number of boundaries associated with the domain, the number of disturbances associated with the domain, and the number of control mechanisms associated with the domain.

10. The method (100, 220) of claim 1, wherein the method includes assessing (104) a priority of the number of boundaries associated with the domain and the number of disturbances associated with the domain.
